(19) Europäisches Patentamt
European Patent Office
Office européen des brevets

(11) **EP 2 815 387 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(21) Anmeldenummer: **13704879.9**

(22) Anmeldetag: **08.02.2013**

(51) Int Cl.:
*G07D 7/01* (2016.01)    *G07D 7/00* (2016.01)

(86) Internationale Anmeldenummer:
**PCT/EP2013/000390**

(87) Internationale Veröffentlichungsnummer:
**WO 2013/120597 (22.08.2013 Gazette 2013/34)**

(54) **VERFAHREN UND VORRICHTUNG ZUM KONTAKTLOSEN PRÜFEN EINES FLÄCHIGEN SICHERHEITSDOKUMENTS**

METHOD AND DEVICE FOR NON-CONTACT TESTING OF A FLAT SECURITY DOCUMENT

PROCÉDÉ ET DISPOSITIF DE CONTRÔLE SANS CONTACT D'UN DOCUMENT DE SÉCURITÉ PLAN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2012 DE 102012002884**

(43) Veröffentlichungstag der Anmeldung:
**24.12.2014 Patentblatt 2014/52**

(73) Patentinhaber: **Giesecke+Devrient Mobile Security GmbH**
**81677 München (DE)**

(72) Erfinder:
• **AURACHER, Ulrich**
**83607 Holzkirchen (DE)**
• **BALDISCHWEILER, Michael**
**81825 München (DE)**

(56) Entgegenhaltungen:
**DE-A1- 19 620 313      DE-A1-102005 046 154**
**DE-A1-102008 009 374    DE-A1-102009 052 585**

EP 2 815 387 B1

**Beschreibung**

Die vorliegende Erfindung betrifft ein Verfahren zum Prüfen eines flächigen Sicherheitsdokuments oder eines Sicherheitsdokumenthalbzeugs sowie eine entsprechende Prüfvorrichtung.

Das Prüfen eines solches Sicherheitsdokuments oder Sicherheitsdokumenthalbzeugs, nachfolgend als Testobjekt bezeichnet, kann einen Schritt des kontaktlosen Erfassens eines Prüfparameters des Testobjekts umfassen. Grundsätzlich können in einem solchen Prüfschritt verschiedenste Prüfparameter erfasst und ausgewertet werden, insbesondere solche Prüfparameter, welche ein Sicherheits- und/ oder Echtheitsmerkmal des Sicherheitsdokuments bzw. des Halbzeugs betreffen. Es ist ebenso möglich, dass Prüfparameter gemessen werden, welche die Funktionsfähigkeit einer Baugruppe eines Sicherheitsdokuments betreffen, beispielsweise einer Antenne oder eines Chips einer Chipkarte.

Soll beispielsweise geprüft werden, ob eine Antenne zur kontaktlosen Datenkommunikation, welche in eine Chipkarte integriert oder auf einen Inlaybogen zum Herstellen einer Chipkarte aufgedruckt ist, funktionsfähig ist, kann als Prüfparameter eine freie, gedämpfte Schwingung der Antennenspule erfasst und ausgewertet werden. Eine solche Schwingung ist in Antwort auf eine Anregung der Antennespule detektierbar. Dazu kann eine geeignete Messeinheit einer Prüfvorrichtung in definiertem Abstand zu dem Testobjekt angeordnet werden. Die Messeinheit kann beispielsweise eine Erregerspule zum Anregen der Antennenspule sowie eine Messantenne zum Erfassen der durch das Anregen erzeugten freien, gedämpften Schwingung der Antennenspule umfassen.

Es kann vorkommen, dass sich das Sicherheitsdokument oder Sicherheitsdokumenthalbzeug während der Prüfung in Relation zu der Messeinheit bewegt oder verlagert. Im Rahmen eines so genannten Biegetests ist es beispielsweise vorgesehen, die Funktionsfähigkeit einer vorstehend erwähnten Antennenspule zu prüfen, während das Sicherheitsdokument, beispielsweise ein portabler Datenträger, verbogen wird. Damit wird der Einfluss des Verbiegens des Sicherheitsdokuments auf die Antenne untersucht.

Das Verbiegen des Sicherheitsdokuments hat aber auch zur Folge, dass sich der Abstand der Messeinheit zum Sicherheitsdokument verändert. Messergebnisse, die bei verschiedenen Abständen erfasst worden sind, sind aber kaum vergleichbar. Auch können solche Messergebnisse, welche z.B. bei zu großen Abständen zwischen Testobjekt und Messeinheit erfasst worden sind, unbrauchbar sein. Ein direktes Anordnen der Messeinheit auf dem Sicherheitsdokument oder dem Sicherheitsdokumenthalbzeug zur Überwindung dieser Problematik verbietet sich aus mehreren Gründen. Einerseits kann dadurch beispielsweise die Biegefähigkeit des Sicherheitsdokuments oder des Halbzeugs beeinträchtigt werden. Andererseits kann eine dabei entstehende Beschädigung des Testobjekts nicht vollkommen ausgeschlossen werden. Schließlich wäre damit auch ein höherer Messverfahrensaufwand verbunden.

Ähnliche Schwierigkeiten hinsichtlich der Anordnung der Messeinheit in Relation zu dem Testobjekt können sich ergeben, wenn ein bogenförmiges Sicherheitsdokumenthalbzeug, beispielsweise ein Mehrnutzenbogen für die Herstellung von Chipkarteninlays, kontaktlos geprüft werden soll, während es aus einer Bearbeitungsvorrichtung, beispielsweise einer Druckmaschine zum Aufdrucken von Antennenspulen, ausgegeben wird. Auch hierbei kann der Abstand zwischen Messeinheit und Sicherheitsdokumenthalbzeug aufgrund der bewegten Ausgabe des bedruckten Bogens schwanken. DE 102008009374 A1 beschreibt ein Verfahren zur Reinhaltung eines Sensorfensters mittels eines am Sensorfenster vorbei geleiteten ionisierten Gas. In DE 19620313 A1 wird ein flexibler Sensorträger für eine Prüfvorrichtung in Bearbeitungsmaschinen zur Detektion von Sicherheitsmerkmalen an zu prüfenden Objekten vorgeschlagen.

Aufgabe der vorliegenden Erfindung ist es demnach, den vorstehend beschriebenen Nachteilen Rechnung zu tragen und ein verbessertes Verfahren zum kontaktlosen Prüfen eines flächigen Sicherheitsdokuments oder Sicherheitsdokumenthalbzeugs vorzuschlagen.

Diese Aufgabe wird durch ein Verfahren und eine Vorrichtung mit den Merkmalen der unabhängigen Ansprüche gelöst. Vorteilhafte Ausgestaltungen und Weiterbildungen sind in den abhängigen Ansprüchen angegeben. Bei einem erfindungsgemäßen Verfahren zum Prüfen eines flächigen Testobjekts in Form eines Sicherheitsdokuments oder eines Sicherheitsdokumenthalbzeugs erfasst eine Messeinheit einen Prüfparameter des Testobjekts kontaktlos. Erfindungsgemäß ist die Messeinheit dazu auf einem flächigen, zumindest teilweise flexiblen Trägermaterial angeordnet, welches beabstandet zu einer Oberfläche des Testobjekts angeordnet und mittels eines parallel zur Oberfläche des Testobjekts verlaufenden Luftstroms auf Abstand zu dem Testobjekt gehalten wird.

Eine erfindungsgemäße Prüfvorrichtung umfasst dementsprechend eine Messeinheit zum kontaktlosen Erfassen des Prüfparameters des Testobjekts, wobei die Messeinheit auf einem flächigen, zumindest teilweise flexiblen Trägermaterial angeordnet und beabstandet zu einer Oberfläche des zu prüfenden Testobjekts angeordnet oder anordenbar ist. Das Trägermaterial mit der darauf angeordneten Messeinheit ist weiter eingerichtet, mittels eines parallel zur Oberfläche des Testobjekts verlaufenden Luftstroms auf Abstand zu dem Testobjekt gehalten zu werden.

Der Luftstrom und das Trägermaterials sind aufeinander abgestimmt bzw. eingerichtet, um einen vorgegebenen Abstand zum Testobjekt einzuhalten. Eine Lageänderung des Testobjektes wird durch den Luftstrom auf das Trägermaterial übertragen und somit ausgeglichen. Der vorgegebene Abstand ist ein effektiver Abstand zwischen Prüfvorrichtung und Testobjekt für den Schritt des Prüfens. Der Abstand wird also insbesondere soweit konstant gehalten, wie es für den Schritt des Prüfens erforderlich ist.

Auf diese Weise wird es möglich, auch bei beweglichem Testobjekt, welches sich beispielsweise während des Prüfens verlagert oder welches während des Prüfens verformt wird, mittels der auf dem flexiblen Trägermaterial angeordneten Messeinheit stets optimale und vergleichbare Messwerte hinsichtlich eines kontaktlos erfassten Prüfparameters zu erhalten. Weiter kann die erfindungsgemäße Messeinheit auf einfache Weise in bestehende Prüf- und/ oder Verarbeitungsvorrichtungen integriert werden und bekannte, auf starr fixierten Trägervorrichtungen angeordnete Messeinheiten problemlos ersetzen.

Das erfindungsgemäße Verfahren erlaubt dabei das Erfassen im Wesentlichen beliebiger Prüfparameter, welche sich mittels einer auf einem flächigen, flexiblen Trägermaterial anordenbaren Messeinheit kontaktlos erfassen lassen. Dabei können beispielsweise magnetische Eigenschaften eines Testobjekts erfasst werden. Das Erfassen eines Prüfparameters kann auch auf induktive, kapazitive, optische oder andere Weise erfolgen.

Ein zu prüfendes Testobjekt im Sinne der vorliegenden Erfindung ist, wie erwähnt, ein flächiges, in der Regel Sicherheitsdokument oder ein Halbzeug zum Herstellen eines solchen Sicherheitsdokuments. Darunter fallen insbesondere eine Banknote, ein Wertpapier, ein Pass oder Personalausweis, ein UHF- oder RFID-Label und dergleichen. Auch portable Datenträger in Form von Chipkarten oder ähnlichen, kartenförmigen Sicherheitsmodulen können erfindungsgemäß als Sicherheitsdokument geprüft werden. Vorstehend genannte Sicherheitsdokumente umfassen in der Regel ein oder mehrere Sicherheits- und/oder Echtheitsmerkmale, welche mittels des beschriebenen Verfahrens geprüft werden können. Auch funktionale Teile eines Sicherheitsmerkmals, wie beispielsweise ein Chip, eine Antenne oder eine kontaktlose Datenkommunikation mittels einer solchen Antenne in Kombination mit einem Chip, können mittels des erfindungsgemäßen Verfahrens kontaktlos geprüft werden.

Gemäß einer bevorzugten Ausführungsform des Verfahrens wird ein kartenförmig ausgebildetes Testobjekt während des Prüfens verformt, vorzugsweise elastisch verbogen. Dazu umfasst die Prüfvorrichtung beispielsweise eine geeignete Halte- und Biegevorrichtung. Die Messeinheit ist eingerichtet, den Prüfparameter mehrfach zu erfassen, insbesondere in verschiedenen Verformungszuständen des Testobjekts. Ein mehrfaches Erfassen des Prüfparameters kann auch in anderen Ausführungsformen des Verfahrens vorgesehen sein. Der vorstehend beschriebene Biegetest zum Prüfen, ob ein Verbiegen des Datenträgers datenträgerinterne Strukturen, beispielsweise eine Antenne und deren Verbindung zum Datenträger, beeinflusst, kann mittels dieser Ausführungsform auf einfache und exakte Weise durchgeführt werden.

Gemäß einer weiteren Ausführungsform kann die Prüfvorrichtung eingerichtet sein, ein flexibles (bogenförmiges) Testobjekt zu prüfen, welches unter Erzeugung eines parallel zur Oberfläche des Testobjekts verlaufenden Luftstroms aus einer Bearbeitungsvorrichtung ausgegeben wird. Der Luftstrom kann dabei durch die Bewegung des Testobjekts selbst erzeugt werden. Auf diese Weise können beispielsweise auf Endlosfolien oder Bögen aufgedruckte Strukturen, insbesondere Antennen- oder sonstige Leiterbahnstrukturen, kontaktlos mittels einer erfindungsgemäßes Messeinheit geprüft werden, beispielsweise dahingehend, ob Leiterbahnbrüche und/oder Kurzschlüsse vorliegen. Der Luftstrom wird dabei in der Regel allein durch die Ausgabe des Bogens aus der Bearbeitungsvorrichtung, beispielsweise einer Druckmaschine, erzeugt. Insbesondere beim Prüfen von bogenförmigen Testobjekten kann es vorgesehen sein, dass die Prüfvorrichtung eine Mehrzahl von Messeinheiten umfasst. Damit lässt sich beispielsweise simultan eine Mehrzahl von nebeneinander auf den Bogen gedruckten Antennenspulen prüfen.

An der Prüfvorrichtung ist eine Lüftervorrichtung vorgesehen, welche eingerichtet ist, einen parallel zur Oberfläche des zu prüfenden Testobjekts verlaufenden Luftstrom zu erzeugen. Beispielsweise zum Durchführen des vorgenannten Biegetests an einer Chipkarte ist ein Schritt des Erzeugens des parallel zur Oberfläche Karte verlaufenden Luftstroms erforderlich, um die Messeinheit auf dem Trägermaterial in vorgegebenem Abstand zu der Karte zu halten, auch wenn diese gebogen wird.

Der Luftstrom wird vorzugsweise einseitig von einer Oberfläche des Testobjekts begrenzt. Eine Veränderung der Lage (Position und/oder Form) des Testobjekts und damit der Testobjektoberfläche hat dann eine Veränderung des Luftstroms zur Folge, welcher durch die veränderte Lage (Position und/ oder Form) des Testobjekts ab- oder umgelenkt wird. Das mittels des Luftstroms zu dem Testobjekt auf Abstand gehaltene flächige, flexible Trägermaterial, auf dem die Messeinheit angeordnet ist, folgt dem abgelenkten Luftstrom. Dadurch folgt das Trägermaterial in gewissem Rahmen auch der Verlagerung (Positionsänderung und/oder Verformung) des Testobjekts. Auf diese Weise kann eine räumliche Anordnung der Messeinheit relativ zu dem Testobjekt im Wesentlichen bzw. für den Prüfungsschritt konstant gehalten werden. Mit anderen Worten, auch bei Verlagerung (Positionsänderung und/ oder Verformung) des Testobjekts bleibt der Abstand zwischen dem flächigen Testobjekt und der Messeinheit im Wesentlichen konstant.

Die Prüfvorrichtung ist vorzugsweise über dem Testobjekt angeordnet. Das flächige Trägermaterial umfasst einen Hauptbereich, auf dem die Messeinheit angeordnet ist. Das flächige Trägermaterial umfasst einen Befestigungsbereich, an dessen Ende die Prüfvorrichtung (ortsfest) befestigt ist. Der Befestigungsbereich erstreckt sich vom Hauptbereich bis zu einem Befestigungspunkt der Prüfvorrichtung. Der Hauptbereich und/oder der Befestigungsbereich des Trägermaterials sind flexibel ausgestaltet.

Durch die flexible Ausgestaltung des Befestigungsbereiches kann nicht nur der Abstand zum Testobjekt ausgeglichen werden, sondern wird zudem erreicht, dass der Hauptbereich durch den Luftstrom parallel zum Testobjekt angeordnet wird. Durch die flexible Ausgestaltung des Hauptbereiches wird - insbesondere auch zusätzlich zum Abstandsausgleich - erreicht, dass der Hauptbereich durch den Luftstrom an einen Deformationszustand des Testobjekts angepasst wird.

Zur Stabilisierung der Prüfvorrichtung 100 im Luftstrom können durchgehende Öffnungen (Löcher) im Trägermaterial vorgesehen sein. Die Öffnungen sind vorzugsweise in den Rändern des Hauptbereiches, also um die Messeinheit herum, angeordnet. Entsprechende Öffnungen können auch innerhalb des Trägermaterials, welches von der Messeinheit eingenommen wird, angeordnet sein. Die Öffnungen sind vorzugsweise im Hauptbereich des Trägerelements (gleichmäßig) verteilt angeordnet. Die Größe, Anzahl und/ oder Anordnung der Öffnungen ist an den Luftstrom und/oder das Trägermaterial angepasst. Die Öffnungen bewirken einen teilweisen, lokalen Ausgleich des Luftdruckes oberhalb und unterhalb des Trägermaterials. Die Öffnungen sind ferner so zueinander angeordnet, dass sie die Ausbildung stabilisierender Luftwirbel bewirken. Vorzugsweise sind zumindest zwei Reihen von Löchern in der Richtung des Luftstroms hintereinander angeordnet.

Gemäß einer im Folgenden exemplarisch ausführlich beschriebenen Ausführungsform des erfindungsgemäßen Verfahrens wird beim Prüfen des Testobjekts die Funktionsfähigkeit einer auf dem Testobjekt angeordneten Antennenspule zur kontaktlosen Datenkommunikation geprüft, indem die Messeinheit als Prüfparameter eine freie gedämpfte Schwingung der Antennenspule kontaktlos erfasst.

Dabei wird in einem ersten Schritt die Antennenspule zur Schwingung angeregt. Dies geschieht vorzugsweise induktiv durch ein gepulstes Magnetfeld, welches zum Beispiel in einfacher Weise durch einen einzelnen Gleichstrompuls erzeugt werden kann. Vorzugsweise besteht die Anregung aus einem einzelnen Magnetfeldpuls. Der Gleichstrompuls kann dabei vorteilhaft als Dirac-Stoß erzeugt werden. Es ist auch möglich, dass das Magnetfeld durch einen (Gleich-)Strompuls erzeugt wird, welcher lediglich - anders als ein Dirac-Stoß - eine steile Flanke aufweist. Bevorzugt erfolgt das Anregen der Antennenspule kontaktlos über eine Erregerspule, welche dazu mit einem entsprechenden Impulsgeber gekoppelt ist.

In einem zweiten Schritt wird die freie, gedämpfte Schwingung der Antennenspule erfasst, welche in Antwort auf die Anregung erzeugt wird. Dies geschieht vorzugsweise ebenfalls kontaktlos mittels einer Messantenne.

Erregerspule und Messantenne sind Teil der Messeinheit und sind auf dem flächigen Trägermaterial angeordnet. Das Trägermaterial wiederum wird, wie erwähnt, vor dem Prüfen geeignet beabstandet zu einer Oberfläche des Testobjekts angeordnet und während des Prüfens mittels eines parallel zur Oberfläche des Testobjekts verlaufenden Luftstroms auf Abstand zu dem Testobjekt gehalten.

In einem dritten Schritt wird die erfasste freie, gedämpfte Schwingung der Antennenspule ausgewertet. Dies kann mittels einer geeigneten Auswertungseinrichtung geschehen, welche mit der Messantenne verbunden ist.

Eine entsprechende Prüfvorrichtung zum Prüfen der Funktionsfähigkeit der Antennenspule für ein kontaktlos kommunizierendes Testobjekt umfasst dazu einen Impulsgeber. Dieser ist eingerichtet, die Antennenspule über eine an den Impulsgeber angeschlossene Erregerspule, welche als Teil der Messeinheit auf dem flexiblen Trägermaterial angeordnet ist, kontaktlos zur Schwingung anzuregen. Weiter umfasst die Prüfvorrichtung eine Messantenne, welche ebenfalls als Teil der Messeinheit auf dem Trägermaterial angeordnet ist. Die Messantenne ist eingerichtet, eine freie, gedämpfte Schwingung der Antennenspule kontaktlos zu erfassen. Eine Auswertungseinrichtung der Prüfvorrichtung schließlich, welche mit der Messantenne verbunden ist, ist eingerichtet, die von der Messantenne erfasste freie, gedämpfte Schwingung auszuwerten.

Die Auswertungseinrichtung kann dabei insbesondere einen Vergleich mit Referenzwerten einer intakten Antennenspule heranziehen. Zur Analyse der von der Messantenne beim Erfassen der freien, gedämpften Schwingung erfassten Signale kann in bekannter Weise beispielsweise ein digitaler Signalprozessor oder ein Oszilloskop dienen.

Die in der beschriebenen Weise angeregte Antennenspule schwingt nach der Anregung unmittelbar mit einer freien, gedämpften Schwingung A(t) aus, welche mit der folgenden Formel beschrieben werden kann:

$$A(t) = A_0(t) \, e^{(-\delta t)} \cos \omega t.$$

A(t) kann dabei dem Strom I oder der Spannung U eines durch die Antennenspule gebildeten elektrischen Schwingkreises entsprechen. Demnach kann der Spannungsverlauf der Antennenspule unmittelbar nach der Anregung mit der folgenden Formel beschrieben werden:

$$U(t) = U_0(t) \, e^{(-\delta t)} \cos \omega t.$$

Die Kreisfrequenz ω entspricht dabei der Eigen-

resonanzfrequenz der Antennenspule. Aus dem Abklingkoeffizienten δ kann die Güte der Antennenspule ermittelt werden. Je länger der Abklingvorgang dauert, desto höher ist die Güte des entsprechenden Schwingkreises. D. h. eine Auswertung der freien gedämpften Schwingung der Antennenspule, d. h. deren Ausschwingen unmittelbar nach der Anregung, erlaubt es, sowohl die Eigenresonanzfrequenz als auch die Güte der Antennenspule zu bestimmen.

Das beschriebene Verfahren beruht nun auf dem Umstand, dass ein Defekt der zu prüfenden Antennenspule, wie beispielsweise eine Unterbrechung einer Leiterbahn oder ein Kurzschluss zwischen einzelnen Spulenwindungen der Antennenspule, dazu führt, dass sich ein bei der Prüfung erkennbarer Signalverlauf des Ausschwingens signifikant von einem entsprechenden Signalverlauf des Ausschwingens einer intakten Antennenspule unterscheidet. Anhand der ausgewerteten freien, gedämpften Schwingung festgestellte Parameter einer fehlerhaften Spule, insbesondere deren Eigenresonanzfrequenz und deren Güte, unterscheiden sich deutlich von den entsprechenden Parametern einer intakten Antennenspule.

Ein Leiterbahnbruch beispielsweise zeigt sich in einem deutlich erkennbar veränderten Ausschwingverhalten, insbesondere einer veränderten, in der Regel erhöhten Eigenresonanzfrequenz. Im Falle eines Kurzschlusses von zwei oder mehr Spulenwindungen ist kaum mehr ein Ausschwingen zu beobachten.

Auf diese Weise kann beim Auswerten der freien, gedämpften Schwingung durch die Prüfvorrichtung nicht nur erkannt werden, ob die Antennenspule fehlerhaft ist oder nicht, sondern es kann im Falle eines Fehlers oder Mangels auch der Typ des Fehlers bzw. die Art des Mangels festgestellt werden.

Die Prüfung der Antennenspule erfolgt kontaktlos, mit sehr geringem Zeitaufwand und kann somit insbesondere während eines laufenden Produktionsprozesses durchgeführt werden. Die Verwendung der erfindungsgemäßen Prüfvorrichtung erlaubt insbesondere eine Prüfung von sich während des Prüfens bewegenden Testobjekten und es kann auch bereits eine gedruckte Antennenspule, welche noch nicht vollständig ausgehärtet ist, mit dem erfindungsgemäßen Verfahren geprüft werden. Überdies ist bei unverändertem Aufbau sowohl ein Prüfen von unbestückten Antennenspulen möglich, also solchen, welche noch nicht mit einem integrierten Schaltkreis verbunden sind, als auch von Antennenspulen mit angeschlossenem Schaltkreis, wie beispielsweise bereits fertig gestellten Transpondern oder kontaktlos kommunizierenden Chipkarten. Schließlich kann das Verfahren, wie bereits erwähnt, parallel für eine Mehrzahl von beispielsweise nebeneinander auf einem Fertigungsbogen angeordneten Antennen durchgeführt werden. Dabei ist keine Abschirmung einzelner Antennen notwendig ist.

Die Erfindung wird nachfolgend mit Bezug auf die beiliegenden Zeichnungen beispielhaft beschrieben.

Darin zeigen:

Figuren 1, 2    jeweils eine zu prüfende Antennenspule auf einem Halbzeug zum Herstellen eines Sicherheitsdokuments;

Figur 3    den Verlauf einer freien, gedämpften Schwingung;

Figur 4A    Komponenten einer bevorzugten Ausführungsform einer erfindungsgemäßen Prüfvorrichtung;

Figur 4B    eine bevorzugte Ausführungsform eines flächigen, flexiblen Trägermaterials für die Prüfvorrichtung aus Fig. 4A mit darauf angeordneter Messeinheit; und

Figur 5    den Vorgang des Prüfens einer Antennenspule aus mittels einer Prüfvorrichtung mit den Komponenten aus den Fig. 4A, B.

Die nachfolgende Beschreibung erläutert exemplarisch ein sehr spezifisches Verfahren zum Prüfen eines Testobjekts in Form eines Sicherheitsdokuments oder eines Sicherheitsdokumenthalbzeugs. Es wird dabei die Funktionsfähigkeit einer auf dem Testobjekt angeordneten Antennenspule zur kontaktlosen Datenkommunikation geprüft, indem eine Messeinheit als Prüfparameter des Testobjekts eine freie gedämpfte Schwingung der Antennenspule kontaktlos erfasst.

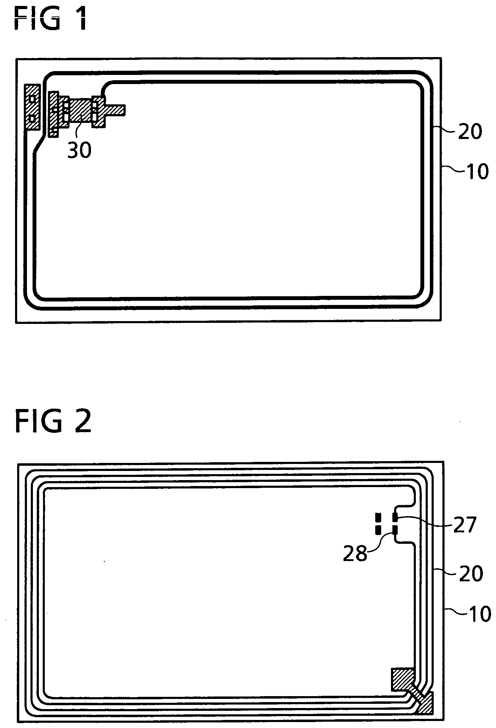

In den Figuren 1 und 2 sind zwei verschiedene Inlayschichten 10 eines portablen Datenträgers, im gezeigten Beispiel einer Chipkarte, mit darauf angeordneter Antennenspule 20 gezeigt. Der Datenträger und die Inlayschicht 10 entsprechen dabei dem vorgenannten Sicherheitsdokument bzw. dem Sicherheitsdokumenthalbzeug.

Die Antennenspule 20 kann dabei beidseitig aufgebracht sein, wobei zum Bilden eines Kreuzungspunktes dann eine Durchkontaktierung notwendig wird. Im Falle einer lediglich einseitig aufgebrachten Antennenspule, wie in Fig. 2 gezeigt, erfolgt eine Kreuzungsbildung mittels einer Brücke (in der Figur unten rechts). Auf der Inlayschicht 10 in Fig. 1 ist bereits ein integrierter Schaltkreis 30 mit der Antennenspule 20 verbunden worden, die Antennenspule 20 in Fig. 2 ist offen und noch unbestückt. Die Enden 27, 28 der offenen Antennenspule 20 sind als Kontaktstellen zur späteren Kontaktierung des Schaltkreises 30 vorgesehen.

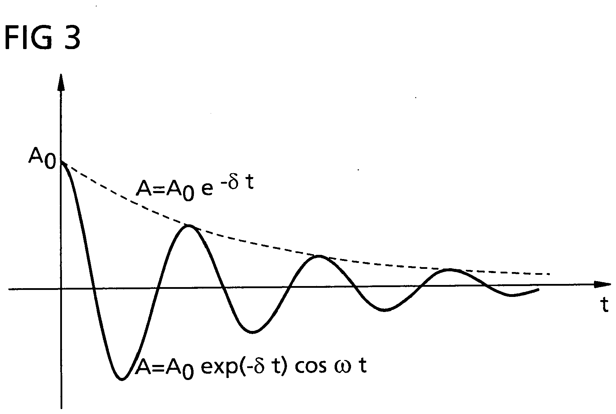

Fig. 3 zeigt den theoretischen Verlauf einer freien, gedämpften Schwingung A(t) im Verlauf der Zeit t. A(t) kann dabei dem Strom I oder der Spannung U entsprechen. Die Kreisfrequenz ω entspricht der Eigenresonanzfrequenz der entsprechenden Spule. Aus dem Abklingkoeffizienten δ kann die Güte der Spule bestimmt werden.

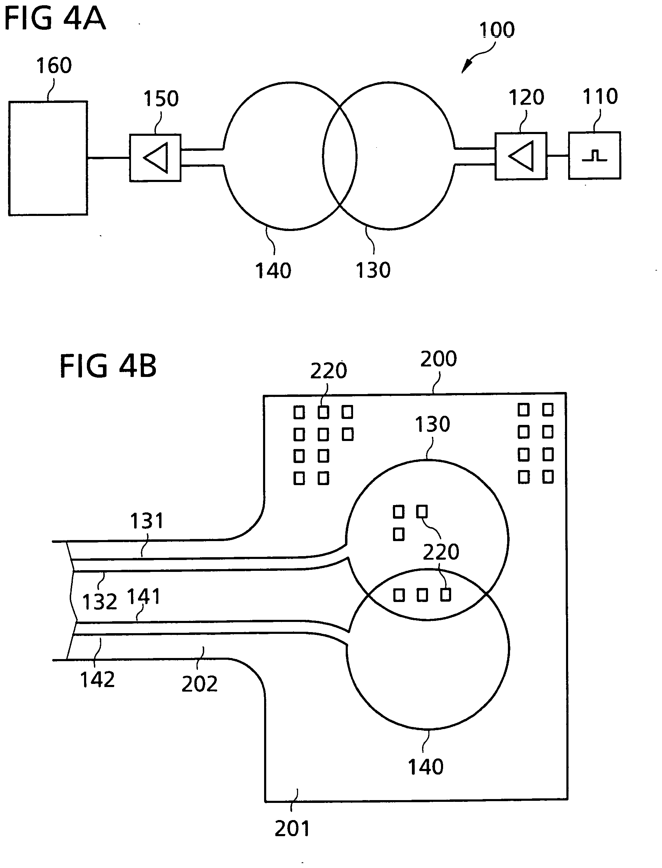

Fig. 4A zeigt schematisch den Aufbau einer Prüfvorrichtung 100 zum Prüfen einer Antennenspule 20 (vgl. Fig. 1, 2). Die Vorrichtung 100 umfasst einen Impulsgeber 110 mit angeschlossenem Verstärker 120. Der Ausgang des Verstärkers 120 wird auf eine Erregerspule 130 gelegt, welche vorzugsweise lediglich eine Windung aufweist. Eine Messantenne 140 ist "orthogonal" zu der Erregerspule 130 angeordnet (vgl. auch Fig. 4B). An der Messantenne 140, welche vorzugsweise ebenso nur eine Spulenwindung besitzt, ist wiederum ein Verstärker 150 angeordnet, dessen Ausgang an eine Auswertungseinrichtung 160 angeschlossen ist.

Vorliegend wird der Begriff der "orthogonalen" Anordnung zweier Spulen zueinander, hier der Erregerspule 130 und der Messantenne 140, so verwendet, dass die Anordnung der Erregerspule 130 zu der Messantenne 140 räumlich derart erfolgt, dass in der Messantenne 140 möglichst kein Signal der Erregerspule 130 eingekoppelt wird. Ein Signal wird genau dann eingekoppelt, wenn das Ringintegral über den magnetischen Fluss Φ durch diese Spule größer als Null ist. Das Integral über den magnetischen Fluss Φ ist genau dann Null, wenn sich magnetische Feldlinien unterschiedlicher Richtung und Feldstärke in der Messantenne 140 über die Gesamtfläche gegenseitig aufheben, oder wenn der Winkel der Feldlinien zur Spulenachse genau 90° beträgt. Im gezeigten Beispiel sind die Erregerspule 130 und die Messantenne 140 koplanar "orthogonal" zueinander angeordnet, indem beide Spulen, wie dargestellt, teilweise übereinander angeordnet sind. Diese Anordnung kann weiter derart abgestimmt werden, dass das Integral über den magnetischen Fluss, wie gewünscht, Null ergibt. Dies folgt daraus, dass die von der Erregerspule 130 erzeugten magnetischen Feldlinien innerhalb und außerhalb der Erregerspule 130 in jeweils unterschiedliche Richtungen verlaufen. Der Grad der Überlappung der Erregerspule 130 und der Messantenne 140 wird nun so gewählt, dass sich diese Feldlinien in der Innenfläche der Messantenne 140 genau aufheben. Eine orthogonale Anordnung der Erregerspule 130 zur Messantenne 140 erleichtert das Erfassen des Ausschwingens der zu prüfenden Antennenspule 20.

Wie in Fig. 4B gezeigt, sind die Erregerspule 130 und die Messantenne 140, welche zusammen die Messeinheit der Prüfvorrichtung 100 bilden, auf einem (in Fig. 4A nicht gezeigten) flächigen, flexiblen Trägermaterial 200 angeordnet.

Die Erregerspule 130 und die Messantenne 140 sind im Hauptbereich 201 des Trägermaterials 200 angeordnet. Der ebenfalls flexibel ausgestaltete, schmalere Befestigungsbereich 202 führt vorzugsweise zu einem nicht dargestellten starren Befestigungsmittel zur Befestigung der Vorrichtung an einem ortsfesten Gegenstand. Beide Anschlussleitungspaare 131, 132 und 141, 142 für die Erregerspule 130 und für die Messantenne 140, sind in dieser Ausgestaltung nebeneinander auf dem Befestigungsbereich 202 des Trägermaterials angeordnet. Während beispielsweise ein Steckverbinder als Befestigungsmittel auf einem starren FR4-Material angeordnet sein kann, kann als flexibles Trägermaterial beispielsweise Capton eingesetzt werden.

Um eine gegenseitige Beeinflussung der (nun nebeneinander angeordneten) Anschlussleitungen zu minimieren, sind voneinander unabhängig mehrere nicht gezeigte Maßnahmen möglich. Die beiden Leiterbahnen des Anschlussleitungspaares können zueinander verdrillt angeordnet sein. Zu diesem Zweck werden die beiden Leiterbahnen des Paares mittels Durchkontaktierungslöchern abwechselnd auf den gegenüberliegenden Seiten des Trägermaterials geführt. Die beiden Leiterbahnen 131 und 132 bzw. 141 und 142 sind, wie in Fig. 4B dargestellt, in einem Abstand zueinander angeordnet. Da sie auf unterschiedlichen Seiten des Trägermaterials geführt werden können sie beim Verdrillen ihre Positionen wechseln, ohne einander zu kreuzen. Die Verdrillung, also insbesondere die Position und/oder Anzahl der Durchkontaktierungslöcher und/oder der Leiterbahnabstand, wird für die beides Anschlussleitungspaare unterschiedlich gewählt. Zudem kann zwischen den beiden Anschlussleitungspaaren auf dem Befestigungsbereich des Trägerelements ein Abschirmungselement angeordnet werden, welches vorzugsweise mit Masse verbunden ist.

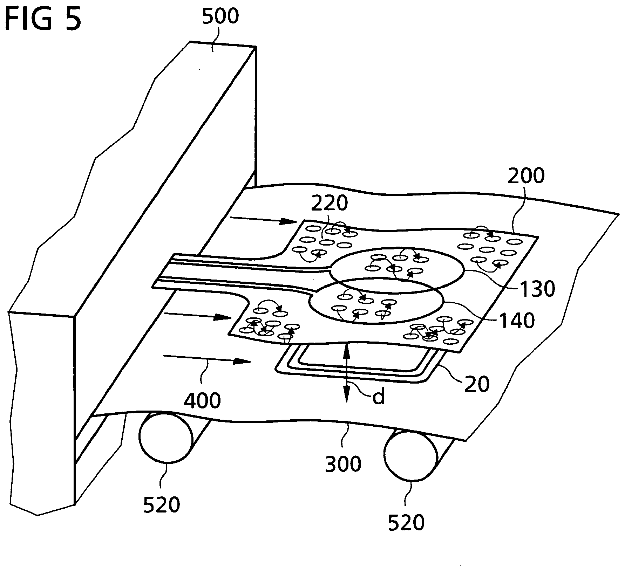

Fig. 5 zeigt, wie die auf dem Trägermaterial 200 angeordnete Messeinheit 130, 140 zum Prüfen einer Antennenspule 20 in geeignetem Abstand d zu einer Oberfläche eines die Antenne 20 tragenden Bogens 300 angeordnet werden kann. Eine oder mehrere Inlayschichten 10 aus den Fig. 1 und 2 können beispielsweise aus einem solchen Bogen 300 herausgelöst, beispielsweise ausgestanzt, werden. Der Bogen 300 umfasst also mehrere zu testende Objekte mit einem Sicherheitsmerkmal, wie beispielsweise der Antenne 20. Die in Fig. 4A zusätzlich zu den die Messeinheit bildenden Spulen 130, 140 gezeigten Komponenten der Prüfvorrichtung 100 sind in Fig. 5 aus Gründen der Übersichtlichkeit nicht noch einmal gezeigt.

Der Bogen 300 wird aus einer Bearbeitungsvorrichtung 500, beispielsweise einer Druckmaschine, ausgegeben. Aufgrund der bewegten Ausgabe des Bogens 300 aus der Vorrichtung 500 wölbt und senkt sich der Bogen 300 beim Ausgeben aus der Bearbeitungsvorrichtung 500. Die flexible Trägerschicht 200 wird mittels eines parallel zur Oberfläche des Bogens 300 verlaufenden Luftstroms 400 auf Abstand zu dem Bogen 300 gehalten.

Vorzugsweise sind mehrere Antennen 20 auf dem Bogen 300 in Transportrichtung des Bogens 300 nebeneinander angeordnet, so dass die mehreren Antennen 20 des Bogens 300 parallel durch mehrere Messanordnungen 200, 130, 140 geprüft werden. Zudem oder alternativ können mehrere Antennen 20 auf dem Bogen 300 in Transportrichtung des Bogens 300 hintereinander angeordnet sein, so dass die mehreren Antennen 20 des Bogens 300 nacheinander durch die Messanordnung 200, 130, 140 geprüft werden.

Der Luftstrom 400, welcher in Transportrichtung des Bogens 300 verläuft, entsteht im gezeigten Beispiel allein durch die Ausgabe des Bogens 300 aus der Bearbeitungsvorrichtung 500 sowie dessen Weitertransport, beispielsweise über Rollen 520 oder dergleichen. Alternativ oder zusätzlich kann eine Lüftervorrichtung (nicht gezeigt) vorgesehen sein, welche den Luftstrom 400 erzeugt oder einen bereits vorhandenen Luftstrom 400 verstärkt. Auf diese Weise kann der Abstand d zwischen der Antenne 20 und der Messeinheit 130,140 auf dem Trägermaterial 200 auch dann im Wesentlichen konstant gehalten werden, wenn sich der Bogen 300 bei der Ausgabe aus der Bearbeitungsvorrichtung 500 senkt, hebt und wölbt. Weiter kann sich das flexible Trägermaterial 200 in seiner Form an die sich verändernden Wölbungen des Bogens 300 anpassen und diese in gewissem Rahmen aufnehmen.

Um ein Flattern der Trägerschicht 200 im Luftstrom 400 zu verhindern oder zumindest zu verringern, können in dem Trägermaterial 200 durchgehende Öffnungen (Löcher) 220 vorgesehen werden, welche in Fig. 4B lediglich vereinzelt angedeutet sind. Tatsächlich sind die Löcher über den gesamten Hauptbereich des Trägermaterials verteilt. Vorzugsweise werden dabei zwei Reihen solcher Löcher 220 jeweils an den äußeren Rändern des Trägers 200 gebildet. Die Reihen sollten dabei in Richtung des Luftstroms hintereinander liegen. Auch im Innern des Trägermaterials 200, beispielsweise innerhalb der Spulen 130,140 sowie in dem Bereich, in dem sich die Spulen 130, 140 überschneiden, können solche Strömungslöcher 220 vorgesehen sein. Die Löcher 220 können beispielsweise einen Durchmesser von ca. 2mm aufweisen. Durch zumindest eines der Löcher 220 kann die (horizontale) Lage des Trägers 200 zur zu messenden Antenne, also zum Datenträger 10 bzw. zum Bogen 300, justiert oder verifiziert werden. Beispielsweise kann durch das Loch hindurch eine Justierungsmarkierung erfasst werden, die auf dem Bogen angebracht ist. Wenn die Justierungsmarkierung durch das Loch erkannt wird, ist der Datenträger 10/Bogen 300 relativ zum Messträger 200 richtig angeordnet. Die Justierungsmarkierung ist optional, da beispielsweise auch vorhandene Eigenschaften des Datenträgers/ Bogens, wie Chipposition, Chipanschlussfläche, charakteristisches Element der Antenne oder ähnliches, erkannt werden können. Die Lage und/oder die Ausgestaltung der Löcher können angepasst sein, um die Verifikation/Justierung der Lage zu unterstützen.

Dadurch, dass der Bereich, in dem der Luftstrom 400 verläuft, durch den Bogen 300 nach unten begrenzt wird, wird der Luftstrom 400, wenn sich der Bogen 300 hebt und wieder senkt, entsprechend umgelenkt. Aufgrund der Flexibilität des Trägermaterials 200 folgt die Messeinheit 130, 140 dem umgelenkten Luftstrom 400 und verläuft dadurch im Wesentlichen stets parallel zu dem Bogen 300, d.h. die Bewegungen des Bogens in der zur Transportebene senkrechten Richtung werden von dem Trägermaterial 200 im Wesentlichen nachvollzogen. Ohne die Luftströmung würde das Trägermaterial 200 schlaff nach unten hängen. Somit kann zum nachfolgend im Detail beschriebenen Erfassen einer freien gedämpften Schwingung der Antennenspule 20 stets ein im Wesentlichen konstanter Abstand zwischen Messeinheit 130, 140 auf dem Trägermaterial 200 und der Antennenspule 20 auf dem Bogen 300 gewährleistet werden.

In analoger Weise kann eine in einen Datenträger integrierte Antennenspule 20 geprüft werden, während der Datenträger im Rahmen eines Biegetests verbogen wird. Dazu wird der Datenträger, entsprechend dem Bogen 300 in Fig. 5, in geeignetem Abstand d zu der Trägerschicht 200 unterhalb der Trägerschicht 200 angeordnet. Ein Luftstrom, welcher die Trägerschicht 200 mit der Messeinheit 130,140 auf Abstand zu dem Datenträger hält, kann durch eine entsprechende Lüftervorrichtung erzeugt werden und verläuft im Wesentlichen entsprechend dem Luftstrom 400 aus Fig. 5. So wie der Bogen 300 in Fig. 5 den Bereich, in dem der Luftstrom 400 verläuft, nach unten begrenzt, begrenzt nun der zu prüfende Datenträger und eventuell eine den Datenträger haltende Vorrichtung den Bereich, den der durch die Lüftervorrichtung erzeugte Luftstrom einnehmen kann, nach unten. Wie mit Bezug auf Fig. 5 beschrieben, lenkt ein sich durch Verbiegen verformender Datenträger den Luftstrom um, woraufhin sich das Trägermaterial 200 in dem laminaren Luftstrom ausrichtet und im Wesentlichen stets in konstantem Abstand zu dem Datenträger bleibt.

Figur 5 zeigt ebenfalls die bereits in Figur 4B angedeuteten Strömungslöcher 220. Nicht dargestellt ist dabei auch in Figur 5, dass die Anordnung der Löcher sich als Reihen von Rand zu Rand fortsetzt.

Durch die Strömungslöcher wird einerseits ein begrenzter, lokaler Druckausgleich erreicht. Der durch den Luftstrom erzeugte Überdruck unterhalb des Trägermaterials - im Vergleich zum Luftdruck oberhalb des Trägermaterials - kann in seinen lokalen Schwankungen somit lokal ausgeglichen werden. Das Trägermaterial wird durch den Luftstrom auf dem gewünschten Abstand gehalten, die regelmäßig nicht vom Testobjekt ausgehenden lokalen Schwankungen des Luftstroms beeinflussen den Abstand aber nicht. Die Ausgestaltung der Löcher (Größe, Anzahl und Anordnung) ist entsprechend gewählt.

Durch die Strömungslöcher werden andererseits, wie in Figur 5 angedeutet, lokale Luftwirbel erzeugt, welche die Lage des Trägermaterials im Luftstrom stabilisieren. Zu diesem Zweck sind zumindest zwei Reihen von Löchern in Richtung des Luftstroms hintereinander angeordnet.

Aus dem Vorstehenden ergibt sich, dass sich eine entsprechende Prüfvorrichtung in sehr allgemeiner Weise zur Prüfung verschiedenster flächiger Sicherheitsdokumente oder Sicherheitsdokumenthalbzeuge einsetzen lässt, bei der mittels einer auf einem flächigen, flexiblen Träger angeordneten Messeinheit ein Prüfparameter des Sicherheitsdokuments oder Sicherheitsdokumenthalbzeugs kontaktlos erfasst wird. Wesentliches Merkmal der Prüfvorrichtung ist die Messeinheit auf dem flächigen, flexiblen Trägermaterial, welche sich auch bei beweglichem Testobjekt stets in definiertem Abstand zu dem Testobjekt befindet. Verantwortlich dafür sind die Anordnung der Messeinheit auf dem flächigen, flexiblen Trägermaterial sowie der erzeugte oder ohnehin vorhandene Luftstrom parallel zur Oberfläche des Testobjekts, welche die Messeinheit auf Abstand zu dem Testobjekt hält. Messungen, welche einen vorgegebenen Abstand zwischen Messeinheit und Testobjekt erfordern, können auf diese Weise zuverlässig, reproduzierbar und mit hoher Genauigkeit durchgeführt werden.

Abschließend werden die wichtigsten Schritte zum Prüfen der Antennespule 20 in Fig. 5 beschreiben. Die Antennespule 20 wird, während diese unterhalb der Trägerschicht 200 angeordnet ist, durch einen Dirac-Impuls angeregt. Dazu wird der an die Erregerspule 130 angeschlossene Impulsgeber 110 so eingestellt, dass er eine maximale Amplitude in kürzest möglicher Zeit erreicht. Es kann dabei beispielsweise eine Amplitude von 12 V mit einer Dauer von nur 29 ns erreicht werden. Die Antennenspule 20 wird durch den positiven Dirac-Impuls des Impulsgebers 110 zu einer freien, gedämpften Schwingung angeregt. Aus dem resultierenden typischen Ausschwingen der Antennenspule 20, welches mittels der Messantenne 140 erfasst und mittels der Auswerteeinrichtung 160 ausgewertet wird, können die Eigenresonanzfrequenz der Antennenspule 20 sowie deren Güte ermittelt werden.

Die Auswertung der mittels der Messantenne 140 erfassten Signale kann auf verschiedene Weise durchgeführt werden. Gemäß einer ersten Variante kann ein digitaler Signalprozessor zur Auswertung dienen. Dabei werden Datensätze von intakten Antennenspulen zur Verifikation erfasster Daten verwendet. Der digitale Signalprozessor wandelt das gemessene Signal mittels eines A/D-Wandlers um und überprüft das gewandelte Signal anhand gespeicherter Referenzwerte. Alternativ oder zusätzlich kann der digitale Signalprozessor auch die Eigenresonanz der Antennenspule ermitteln sowie den Spannungspegel des Ausschwingens überprüfen.

Gemäß einer zweiten Variante wird anhand einer Referenzspule eine parallele Referenzmessung mit einer als intakt bekannten Antennenspule durchgeführt. Bei diesem Auswertungsverfahren muss also lediglich der Unterschied, das Delta, zwischen dem für die zu prüfenden Antennenspule erfassten Signal und dem Signal der Referenzspule bestimmt werden. Weicht dieses Delta zu weit von vorgegebenen Grenzwerten ab, so wird die geprüfte Antennenspule als fehlerhaft eingestuft. Die Delta-Bildung zweier Signale kann bereits mit einem einfachen Differenzverstärker (Komparatorschaltung) und nachfolgenden Peak-Detektoren erfolgen.

Gemäß einer dritten Variante kann ein Oszilloskop mit Hilfe gespeicherter Grenzwerte die aktuell erfassten Daten auswerten. Mit den von dem Oszilloskop zur Verfügung gestellten mathematischen Funktionen können auf einfache Weise automatisch die Eigenresonanz und die Güte der geprüften Antennenspule bestimmt werden.

Weist die Antennenspule 20 einen Fertigungsfehler auf, beispielsweise einen Leiterbahnbruch oder einen Kurzschluss zwischen einzelnen Spulenwindungen, so führt dies zu einem signifikant abweichenden Signalverlauf der "Nachschwingung", d.h. der entsprechenden freien, gedämpften Schwingung der beschädigten Antennenspule. Insbesondere Eigenresonanzfrequenz und/oder Güte einer solchen Spule unterscheiden sich deutlich erkennbar von den entsprechenden Werten einer intakten Antennenspule.

Der Signalverlauf einer freien, gedämpften Schwingung einer Antennenspule, welche einen Leiterbahnbruch aufweist, zeigt eine kaum noch erkennbare, deutlich erhöhte Eigenresonanzfrequenz im Vergleich zu einer intakten Spule. Im Falle eines Kurzschlusses von Spulenwindungen der Antennenspule 20 ist im Vergleich zu einer intakten Antennenspule 20 kaum mehr ein Ausschwingen der Spule zu erkennen.

D.h. die beiden hauptsächlich auftretenden Fehler einer zu prüfenden Antennenspule 20, ein Leiterbahnbruch oder ein Kurzschluss zwischen Spulenwindungen, können durch Erfassen und Auswerten einer in Folge der Anregung der Spule 20 durch einen Impuls auftretenden freien, gedämpften Schwingung der Antennenspule zuverlässig erkannt werden.

**Patentansprüche**

1. Verfahren zum Prüfen eines flächigen Sicherheitsdokuments (10) oder eines flächigen Sicherheitsdokumenthalbzeugs (300) als flächiges Testobjekt (10; 300), wobei eine Messeinheit (130, 140), die auf einem flächigen Trägermaterial (200) angeordnet ist, welches zumindest teilweise flexibel ausgebildet ist, einen Prüfparameter des Testobjekts (10; 300) kontaktlos erfasst, **dadurch gekennzeichnet, dass** die Messeinheit (130, 140) mittels eines parallel zur Oberfläche des Testobjekts (10; 300) verlaufenden Luftstroms (400) auf Abstand (d) zu dem Testobjekt (10; 300) bzw. beabstandet zu einer Oberfläche des Testobjekts (10; 300) gehalten wird und dass in einem Verfahrensschritt der parallel zur Oberfläche des Testobjekts (10; 300) verlaufenden Luftstrom (400) erzeugt wird.

2. Verfahren nach einem der vorhergehenden Ansprüche, **dadurch gekennzeichnet, dass** das Testobjekt (10) kartenförmig ausgebildet und während des Prüfens verformt, vorzugsweise gebogen, wird.

3. Verfahren nach einem der Ansprüche 1 oder 2, **dadurch gekennzeichnet, dass** das Testobjekt (300) geprüft wird, während es unter Erzeugung eines parallel zur Oberfläche des Testobjekts (10; 300) verlaufenden Luftstroms (400) aus einer Bearbeitungsvorrichtung (500) ausgegeben wird.

4. Verfahren nach einem der Ansprüche 1 bis 3, **dadurch gekennzeichnet, dass** beim Prüfen des Testobjekts (10; 300) die Funktionsfähigkeit einer auf dem Testobjekt (10; 300) angeordneten Antennenspule (20) zur kontaktlosen Datenkommunikation geprüft wird, indem die Messeinheit (130, 140) als Prüfparameter eine freie gedämpfte Schwingung der Antennenspule (20) kontaktlos erfasst.

5. Verfahren nach Anspruch 4, **gekennzeichnet durch** die Schritte:

   - Anregen der Antennenspule (20) zur Schwingung;
   - Erfassen der freien, gedämpften Schwingung der Antennenspule (20) in Antwort auf die Anregung;
   - Auswerten der freien gedämpften Schwingung der Antennenspule (20).

6. Verfahren nach Anspruch 5, **dadurch gekennzeichnet, dass** die Antennenspule (20) induktiv durch ein gepulstes Magnetfeld angeregt wird, welches vorzugsweise durch einen einzelnen Strompuls, vorzugsweise einen Gleichstrompuls, erzeugt wird, wobei der Strompuls vorzugsweise als Dirac-Stoß oder als ein Strompuls, welcher lediglich eine steile Flanke aufweist, erzeugt wird.

7. Verfahren nach einem der vorhergehenden Ansprüche, **dadurch gekennzeichnet, dass** das flächige Trägermaterial (200) in seinem Hauptbereich, auf welchem die Messeinheit (130,140) angeordnet ist, und/oder in seinem Befestigungsbereich flexibel ausgebildet wird.

8. Prüfvorrichtung (100) zum Prüfen eines Sicherheitsdokuments oder eines Sicherheitsdokumenthalbzeugs als flächiges Testobjekt (10; 300), umfassend

   - eine Messeinheit (130, 140) zum kontaktlosen Erfassen eines Prüfparameters des Testobjekts (10; 300), die auf einem flächigen, flexiblen Trägermaterial (200) angeordnet ist,

   **dadurch gekennzeichnet, dass** das Trägermaterial (200) eingerichtet ist, mittels eines parallel zur Oberfläche des Testobjekts (10; 300) verlaufenden Luftstroms (400) auf Abstand (d) zu dem Testobjekt (10; 300) bzw. beabstandet zu einer Oberfläche eines zu prüfenden Testobjekts (10; 300) gehalten zu werden, ferner **gekennzeichnet durch** eine Lüftervorrichtung zum Erzeugen eines parallel zur Oberfläche eines Testobjekts (10; 300) verlaufenden Luftstroms (400).

9. Prüfvorrichtung (100) nach Anspruch 8, **dadurch gekennzeichnet, dass** das Trägermaterial (200) durchgehende Öffnungen (220) zur Stabilisierung der Prüfvorrichtung (100) im Luftstrom aufweist.

10. Prüfvorrichtung (100) nach einem der Ansprüche 8 oder 9, **dadurch gekennzeichnet, dass** die Prüfvorrichtung (100) eingerichtet ist, ein kartenförmiges Testobjekt (10) zu prüfen und das Testobjekt (10) während der Prüfung zu verformen, vorzugsweise zu biegen.

11. Prüfvorrichtung (100) nach einem der Ansprüche 8 oder 9, **dadurch gekennzeichnet, dass** die Prüfvorrichtung (100) eingerichtet ist, ein vorzugsweise flexibles Testobjekt (300) zu prüfen, welches eine Bearbeitungsvorrichtung (500) ausgibt unter Erzeugung eines parallel zur Oberfläche des Testobjekts (300) verlaufenden Luftstroms (400).

12. Prüfvorrichtung (100) nach einem der Ansprüche 8 bis 11, **dadurch gekennzeichnet, dass** die Messeinrichtung (130, 140) eingerichtet ist, den Prüfparameter mehrfach zu erfassen.

13. Prüfvorrichtung (100) nach einem der Ansprüche 8 bis 12, **dadurch gekennzeichnet, dass** die Prüfvorrichtung (100) eingerichtet ist, die Funktionsfähigkeit einer auf dem Testobjekt (10; 300) angeordneten Antennenspule (20) zur kontaktlosen Datenkommunikation zu prüfen und die Messeinheit (130, 140) eingerichtet ist, als Prüfparameter eine freie gedämpfte Schwingung der Antennenspule (20) kontaktlos zu erfassen.

14. Prüfvorrichtung (100) nach einem der Ansprüche 8 bis 13, **dadurch gekennzeichnet, dass** eine der durchgehenden Öffnungen (220) zur Verifikation und/oder Justierung der Lage der Prüfvorrichtung (100) zum Testobjekt (10; 300) geeignet ist.

## Claims

1. A method for checking a flat security document (10) or a flat security document semi-finished product (300) as a flat test object (10; 300), wherein a measuring unit (130, 140) arranged on a flat carrier material (200) which is at least partially configured to be flexible, detects a check parameter of the test object (10; 300) in contactless manner, **characterized in that** the measuring unit (130, 140) is held at a distance (d) to the test object (10; 300) and/or is held spaced apart from a surface of the test object (10; 300) by means of an air stream (400) flowing parallel to the surface the test object (10; 300) and that the air stream (400) flowing parallel to the surface of the test object (10; 300) is produced in a method step.

2. The method according to any of the preceding claims, **characterized in that** the test object (10) is configured to be card-shaped and is deformed, preferably bent, during the check.

3. The method according to any of claims 1 or 2, **characterized in that** the test object (300) is checked while it is output from a processing apparatus (500) while an air stream (400) is produced which flows parallel to the surface of the test object (10; 300).

4. The method according to any of claims 1 to 3, **characterized in that** in the check of the test object (10; 300), the operability of an antenna coil (20) for contactless data communication arranged on the test object (10; 300) is checked by the measuring unit (130, 140) detecting in contactless manner a free damped oscillation of the antenna coil (20).

5. The method according to claim 4, **characterized by** the steps of:

   - exciting the antenna coil (20) to oscillate;
   - detecting the free damped oscillation of the antenna coil (20) in response to the excitation;
   - evaluating the free damped oscillation of the antenna coil (20).

6. The method according to claim 5, **characterized in that** the antenna coil (20) is inductively excited by a pulsed magnetic field, which is produced preferably by a single current pulse, preferably a direct current pulse, wherein the current pulse is preferably produced as a Dirac impulse or as a current pulse which only has one steep flank.

7. The method according to any of the preceding claims, **characterized in that** the flat carrier material (200) is configured to be flexible in its main portion, on which the measuring unit (130,140) is arranged, and/or in its attachment region.

8. A checking apparatus (100) for checking a security document or a security document semi-finished product as a flat test object (10; 300), comprising

   - a measuring unit (130, 140) for contactless detection of a check parameter of the test object (10; 300), said unit being arranged on a flat, flexible carrier material (200),

   **characterized in that** the carrier material (200) is adapted to be held at a distance (d) to the test object (10; 300) and/or to be held spaced apart from a surface of the test object (10; 300) to be checked by means of an air stream (400) flowing parallel to the surface of the test object (10; 300), further **characterized by** a fan apparatus for producing an air stream (400) flowing parallel to the surface of a test object (10; 300).

9. The checking apparatus (100) according to claim 8, **characterized in that** the carrier material (200) has through openings (220) for stabilizing the checking apparatus (100) in the air stream.

10. The checking apparatus (100) according to any of claims 8 or 9, **characterized in that** the checking apparatus (100) is adapted to check a card-shaped test object (10) and to deform, preferably to bend, the test object (10) during the check.

11. The checking apparatus (100) according to any of claims 8 or 9, **characterized in that** the checking apparatus (100) is adapted to check a preferably flexible test object (300) which is output by a processing apparatus (500) while an air stream (400) is produced which flows parallel to the surface of the test object (300).

12. The checking apparatus (100) according to any of claims 8 to 11, **characterized in that** the measuring apparatus (130, 140) is adapted to detect the check parameter multiple times.

13. The checking apparatus (100) according to any of claims 8 to 12, **characterized in that** the checking apparatus (100) is adapted to check the operability of an antenna coil (20) for contactless data communication arranged on the test object (10; 300), and the measuring unit (130, 140) is adapted to detect in contactless manner a free damped oscillation of the antenna coil (20) as the check parameter.

14. The checking apparatus (100) according to any of claims 8 to 13, **characterized in that** one of the through openings (220) is suitable for verification and/or adjustment of the position of the checking apparatus (100) to the test object (10; 300).

## Revendications

1. Procédé d'examen d'un document de sécurité (10) en feuille ou d'un semi-fini en feuille pour document de sécurité (300) en tant qu'objet de test (10; 300) en feuille, cependant qu'une unité de mesure (130, 140) agencée sur un matériau support (200) en feuille réalisé sous forme au moins partiellement flexible saisit sans contact un paramètre d'examen de l'objet de test (10; 300), **caractérisé en ce que** l'unité de mesure (130, 140) est, au moyen d'un flux d'air (400) s'écoulant parallèlement à la surface de l'objet de test (10; 300), maintenue à distance (d) de l'objet de test (10; 300) ou écartée d'une surface de l'objet de test (10; 300), et que, lors d'une étape du procédé, le flux d'air (400) s'écoulant parallèlement à la surface de l'objet de test (10; 300) est généré.

2. Procédé selon une des revendications précédentes, **caractérisé en ce que** l'objet de test (10) est réalisé sous forme de carte et est déformé pendant l'examen, de préférence courbé.

3. Procédé selon une des revendications 1 ou 2, **caractérisé en ce que** l'objet de test (300) est examiné pendant que, sous génération d'un flux d'air (400) s'écoulant parallèlement à la surface de l'objet de test (10; 300), il est délivré depuis le dispositif de traitement (500).

4. Procédé selon une des revendications de 1 à 3, **caractérisé en ce que,** lors de l'examen de l'objet de test (10; 300), la capacité de fonctionnement d'une bobine d'antenne (20) destinée à la communication de données sans contact agencée sur l'objet de test (10; 300) est examinée, ce qui a lieu **en ce que** l'unité de mesure (130, 140) saisit sans contact, en tant que paramètre d'examen, une oscillation libre amortie de la bobine d'antenne (20).

5. Procédé selon la revendication 4, **caractérisé par** les étapes :

   - excitation de la bobine d'antenne (20) en oscillation ;
   - saisie de l'oscillation libre amortie de la bobine d'antenne (20) en réponse à l'excitation ;
   - évaluation de l'oscillation libre amortie de la bobine d'antenne (20).

6. Procédé selon la revendication 5, **caractérisé en ce que** la bobine d'antenne (20) est excitée par induction par un champ magnétique pulsé généré de préférence par une impulsion individuelle de courant, de préférence par une impulsion de courant continu, cependant que l'impulsion de courant est générée de préférence sous forme d'impulsion de Dirac ou d'impulsion de courant présentant seulement un flanc raide.

7. Procédé selon une des revendications précédentes, **caractérisé en ce que** le matériau support (200) en feuille est, dans sa zone principale sur laquelle l'unité de mesure (130, 140) est agencée et/ou dans sa zone de fixation, réalisé sous forme flexible.

8. Dispositif d'examen (100) destiné à l'examen d'un document de sécurité ou d'un semi-fini pour document de sécurité en tant qu'objet de test (10; 300) en feuille, comprenant

- une unité de mesure (130, 140) destinée à la saisie sans contact d'un paramètre d'examen de l'objet de test (10; 300), laquelle est agencée sur un matériau support (200) flexible en feuille,

**caractérisé en ce que** le matériau support (200) est conçu pour, au moyen d'un flux d'air (400) s'écoulant parallèlement à la surface de l'objet de test (10; 300), être maintenu à distance (d) de l'objet de test (10; 300) ou écarté d'une surface d'un objet de test (10; 300) à examiner, **caractérisé en outre par** un dispositif de ventilateur destiné à générer un flux d'air (400) s'écoulant parallèlement à la surface d'un objet de test (10; 300).

9. Dispositif d'examen (100) selon la revendication 8, **caractérisé en ce que** le matériau support (200) comporte des ouvertures continues (220) pour la stabilisation du dispositif d'examen (100) dans le flux d'air.

10. Dispositif d'examen (100) selon une des revendications 8 ou 9, **caractérisé en ce que** le dispositif d'examen (100) est conçu pour examiner un objet de test (10) en forme de carte et pour déformer l'objet de test (10) pendant l'examen, de préférence pour le courber.

11. Dispositif d'examen (100) selon une des revendications 8 ou 9, **caractérisé en ce que** le dispositif d'examen (100) est conçu pour examiner un objet de test (300) de préférence flexible qu'un dispositif de traitement (500) délivre sous génération d'un flux d'air (400) s'écoulant parallèlement à la surface de l'objet de test (300).

12. Dispositif d'examen (100) selon une des revendications de 8 à 11, **caractérisé en ce que** l'unité de mesure (130, 140) est conçue pour saisir plusieurs fois le paramètre d'examen.

13. Dispositif d'examen (100) selon une des revendications de 8 à 12, **caractérisé en ce que** le dispositif d'examen (100) est conçu pour examiner la capacité de fonctionnement d'une bobine d'antenne (20) destinée à la communication de données sans contact agencée sur l'objet de test (10; 300), et que l'unité de mesure (130, 140) est conçue pour saisir sans contact, en tant que paramètre d'examen, une oscillation libre amortie de la bobine d'antenne (20).

14. Dispositif d'examen (100) selon une des revendications de 8 à 13, **caractérisé en ce qu'**une des ouvertures continues (220) est adaptée à la vérification et/ou à l'ajustement de la position du dispositif d'examen (100) par rapport à l'objet de test (10; 300).

## FIG 1

## FIG 2

## FIG 3

$$A=A_0 \, e^{-\delta t}$$

$$A=A_0 \exp(-\delta t) \cos \omega t$$

## FIG 4A

## FIG 4B

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008009374 A1
- DE 19620313 A1